# FASCICULE DE BREVET EUROPEEN

(11) **EP 2 580 459 B1**
(45) Date de publication et mention de la délivrance du brevet: **11.05.2016**
(21) Numéro de dépôt: 11728348.1
(22) Date de dépôt: 01.06.2011
(51) Int. Cl.: F02K 1/72

(54) **GRILLE DE DÉVIATION DU TYPE AUTOSUPPORTÉ POUR INVERSEUR DE POUSSÉE**
SELBSTRAGENDES GITTER FÜR EINEN SCHUBUMKEHRER
SELF-SUPPORTED CASCADE FOR A THRUST REVERSER

(30) Priorité: 08.06.2010 FR 1054473
(43) Date de publication de la demande: 17.04.2013
(73) Titulaire: Aircelle, 76700 Gonfreville L'Orcher (FR)
(72) Inventeur: VAUCHEL, Guy, Bernard, F-76700 Harfleur (FR)
(74) Mandataire: Chevalier, Renaud Philippe
(86) Numéro de dépôt international: PCT/FR2011/051259
(87) Numéro de publication internationale: WO 2011/154644

(56) Documents cités:
- EP-A2- 1 515 035
- EP-A2- 1 852 595
- EP-A2- 2 138 697
- FR-A1- 2 849 113
- US-A- 4 778 110
- US-B1- 7 484 356

## Description

La présente invention se rapporte à une grille de déviation du type autosupporté pour un inverseur de poussée à grilles d'une nacelle pour turboréacteur d'avion.

Elle se rapporte également un assemblage de grilles de déviation et à une nacelle pour turboréacteur d'avion comportant un tel assemblage.

Un avion est mû par plusieurs turboréacteurs logés chacun dans une nacelle abritant également un ensemble de dispositifs d'actionnement annexes liés à son fonctionnement et assurant diverses fonctions lorsque le turboréacteur est en fonctionnement ou à l'arrêt. Ces dispositifs d'actionnement annexes comprennent notamment un système mécanique d'inversion de poussée.

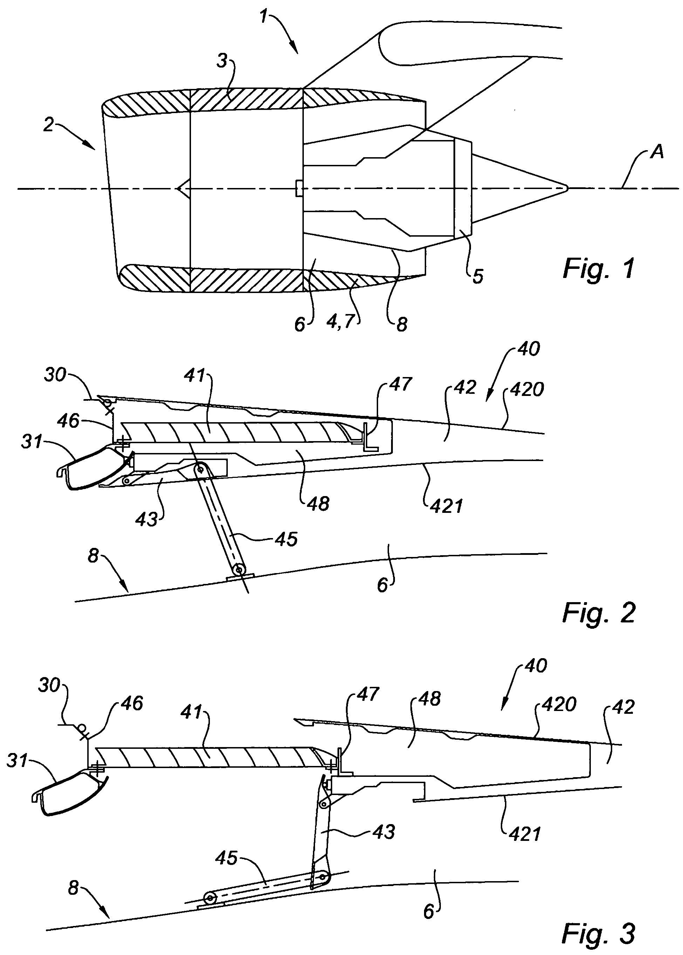

Comme cela est illustré sur la figure 1, une nacelle présente généralement une structure tubulaire comprenant une entrée d'air 2 en amont du turboréacteur, une section médiane 3 destinée à entourer une soufflante du turboréacteur, une section aval 4 abritant des moyens d'inversion de poussée (autrement appelés inverseur de poussée) et destinée à entourer la chambre de combustion du turboréacteur, et est généralement terminée par une tuyère d'éjection 5 dont la sortie est située en aval du turboréacteur.

Les nacelles modernes sont destinées à abriter un turboréacteur double flux apte à générer par l'intermédiaire des pales de la soufflante en rotation un flux d'air chaud (également appelé flux primaire) issu de la chambre de combustion du turboréacteur, et un flux d'air froid (flux secondaire) qui circule à l'extérieur du turboréacteur à travers un canal annulaire 6, également appelé veine, formé entre un carénage 7 du turboréacteur et une paroi interne 8 de la nacelle. Les deux flux d'air sont éjectés du turboréacteur par l'arrière de la nacelle. Les deux flux d'air sont éjectés du turboréacteur par l'arrière de la nacelle.

Le rôle d'un inverseur de poussée est, lors de l'atterrissage d'un avion, d'améliorer la capacité de freinage de celui-ci en redirigeant vers l'avant au moins une partie de la poussée engendrée par le turboréacteur. Dans cette phase, l'inverseur obstrue le canal annulaire du flux d'air froid et dirige ce dernier vers l'avant de la nacelle, engendrant de ce fait une contre-poussée qui vient s'ajouter au freinage des roues de l'avion.

Les moyens mis en oeuvre pour réaliser cette réorientation du flux d'air froid varient suivant le type d'inverseur. Cependant, dans tous les cas, la structure d'un inverseur comprend des capots mobiles déplaçables entre, d'une part, une position déployée (ou « jet inverse ») dans laquelle ils ouvrent dans la nacelle un passage destiné au flux dévié, et d'autre part, une position d'escamotage (ou « jet direct ») dans laquelle ils ferment ce passage.

Les figures 2 et 3 illustrent un inverseur de poussée 40 à grilles classique, également connu sous le nom d'inverseur à cascade, dans lequel la réorientation du flux d'air est effectuée par des grilles de déviation 41, le capot 42 étant monté coulissant selon l'axe A de la nacelle de manière à découvrir ou recouvrir ces grilles 41. Des portes de blocage 43 complémentaires, également appelées volets d'inversion, activées par le coulissement du capotage, permettent généralement une fermeture du canal annulaire 6 de flux d'air froid (flux secondaire) en aval des grilles 41 de manière à optimiser la réorientation de ce flux d'air.

Ce type d'inverseur de poussée 40 à grilles est disposé en aval du carter de soufflante 30 d'un turboréacteur à double flux, et de son capot de soufflante 31 associé. Cet inverseur 40 comporte au moins un capot mobile 42 présentant un panneau extérieur 420 et une paroi interne 421 (ou diaphragme intérieur) destinée à délimiter, dans une position de jet direct du turboréacteur (figure 2), une paroi externe du canal annulaire 6 dans lequel s'écoule le flux secondaire, l'inverseur 40 comportant au moins un volet d'inversion 43 monté de manière articulée sur la paroi interne 421 du capot mobile 42 et actionné par au moins une bielle 45 lors du déplacement du capot mobile 42 vers l'aval, de sorte que, dans une position d'inversion de poussée ou jet inverse (figure 3), chaque volet d'inversion 43 comporte une zone s'etendant dans le canal annulaire 6 de manière à dévier au moins une partie du flux secondaire hors dudit canal annulaire 6.

Cet inverseur de poussée 40 comporte une pluralité de grilles de déviation 41, fixées entre un cadre avant 46 périphérique et un cadre arrière 47 périphérique fixe qui généralement rejoint entre eux le panneau extérieur 420 et la paroi interne 421 du capot mobile 42. En fonctionnement, la réorientation du flux secondaire, dans la position jet inverse, est effectuée par ces grilles de déviation 41, le capot mobile 42 ayant principalement une fonction de coulissage visant à découvrir ou recouvrir ces grilles de déviation 41, la translation du capot mobile 42 s'effectuant selon un axe longitudinal sensiblement parallèle à l'axe A de la nacelle 1. Un logement 48 est prévu dans le capot mobile 42 et permet de loger les grilles de déviation 41 lorsque l'inverseur de poussée 40 n'est pas actionné, c'est-à-dire en position de jet direct, comme cela est représenté sur la figure 2.

Le coulissement du capot mobile 42 entre ses positions jet direct et jet inverse est assuré par des vérins (non illustrés) répartis à la périphérie de la nacelle. Classiquement, ces vérins sont fixés en amont sur une partie fixe de la nacelle, telle que le cadre avant 46 de support amont des grilles de déviation 41, et en aval à l'intérieur du capot mobile 42, par l'intermédiaire de ferrures adaptées.

Plus précisément, les tiges d'actionnement de ces vérins traversent le cadre arrière 47 de support aval des grilles de déviation 41 pour coopérer avec le capot mobile 42. Ceci implique nécessairement que le cadre arrière 47 de support amont des grilles de déviation 41 présente un certain encombrement radial. En outre, les grilles 41, en mode d'inversion ou position jet inverse, subissent de gros chargements aérodynamiques qui tendent à faire ressortir vers l'extérieur les parties avales des grilles 41 fixées sur le cadre arrière 47 périphérique. La hauteur (ou épaisseur) du cadre arrière 47 est avantageusement supérieure à celle des grilles 41 afin de fournir la meilleure inertie possible à l'assemblage de grilles 41.

Dans les structures d'inverseur de poussée 40 standard, l'épaisseur des lignes aérodynamiques est suffisante pour avoir une inertie de l'assemblage de grilles 41 adaptée et pouvoir traverser le cadre arrière 47 par la tige de vérin pour atteindre l'attache du capot mobile 42 en aval du cadre arrière 47. Pour retrouver l'inertie courante, la structure du cadre arrière 47 est festonnée au niveau de l'ouverture, augmentant dans les mêmes proportions la hauteur du cadre arrière.

Or dans les nacelles modernes, où l'on cherche à réduire les pertes aérodynamiques dues aux surfaces mouillées, les lignes sont de plus en plus ramassées, et il importe donc notamment de pouvoir réduire l'épaisseur radiale du cadre arrière, voire de pouvoir supprimer complètement le cadre arrière. En effet, il n' est souvent plus possible de loger un cadre arrière comportant des ouvertures dans le capot mobile, l'épaisseur totale du capot n'étant plus suffisante pour loger toute l'architecture de l'inverseur de poussée dans la nacelle.

Pour répondre à ce problème de suppression du cadre arrière dans les inverseurs de poussée à grilles, il est connu, notamment des demandes de brevet EP 1 852 595 A2 et EP 1 515 035 A2, d'employer un assemblage de grilles du type autosupportée, autrement appelées grilles autosupportées, c'est-à-dire un assemblage de grilles uniquement fixées entre elles et au cadre avant, sans cadre arrière.

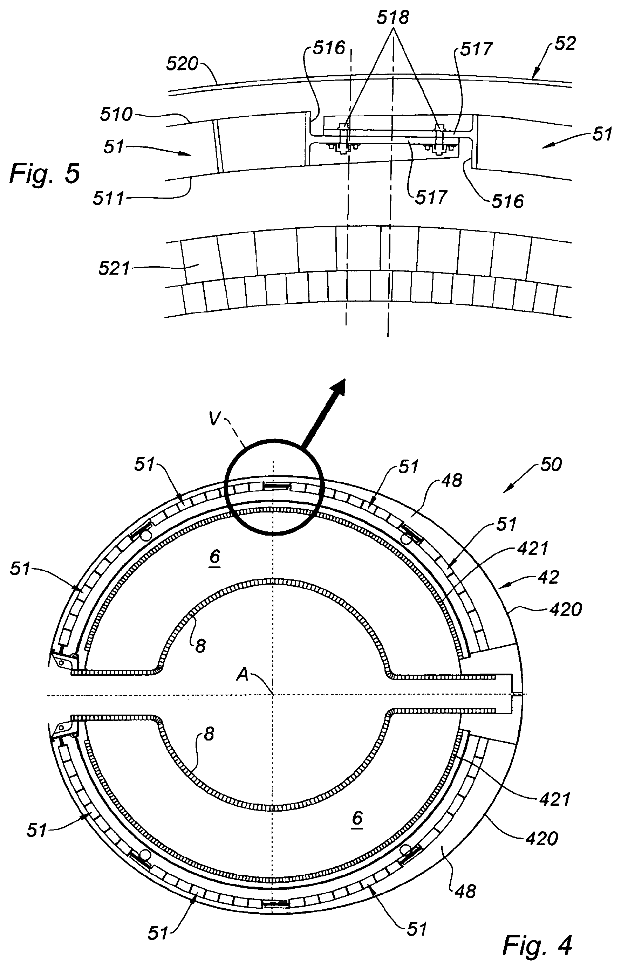

Les figures 4 à 6 illustrent un exemple connu d'assemblage de grilles autosupportées 51. Comme illustré sur la figure 4, les inverseurs de poussée 50 à grilles autosupportées 51 comportent un assemblage de plusieurs grilles autosupportées 51 qui permet de réaliser un agencement souple du pilotage des nappes d'inversion. Les grilles autosupportées 51 sont réparties sur la périphérie de l'aval d'un cadre avant 56 périphérique et peuvent constituer un assemblage pouvant contenir jusqu'à douze grilles par demi-côté de l'inverseur 50, comme par exemple quatre grilles autosupportées 51 par demi-côté dans l'exemple de la figure 4.

La multiplicité des grilles autosupportées 51 permet un pilotage des nappes d'inversion très souple et permet d'utiliser une configuration spécifique d'aubage dans plusieurs positions, ceci permettant au final de maîtriser le coût global de réalisation de la fonction d'inversion par des grilles de déviation.

Comme visible sur la figure 5 qui illustre un détail de la figure 4, chaque grille autosupportée 51 est pourvue d'une pluralité d'alvéoles et présentent deux faces frontales ajourées opposées, en l'occurrence une face frontale supérieure 510 située vers l'extérieur en regard du panneau extérieur 420 du capot mobile 42 et une face frontale inférieure 511 située vers l'intérieur en regard de la paroi interne 421 du capot mobile 42.

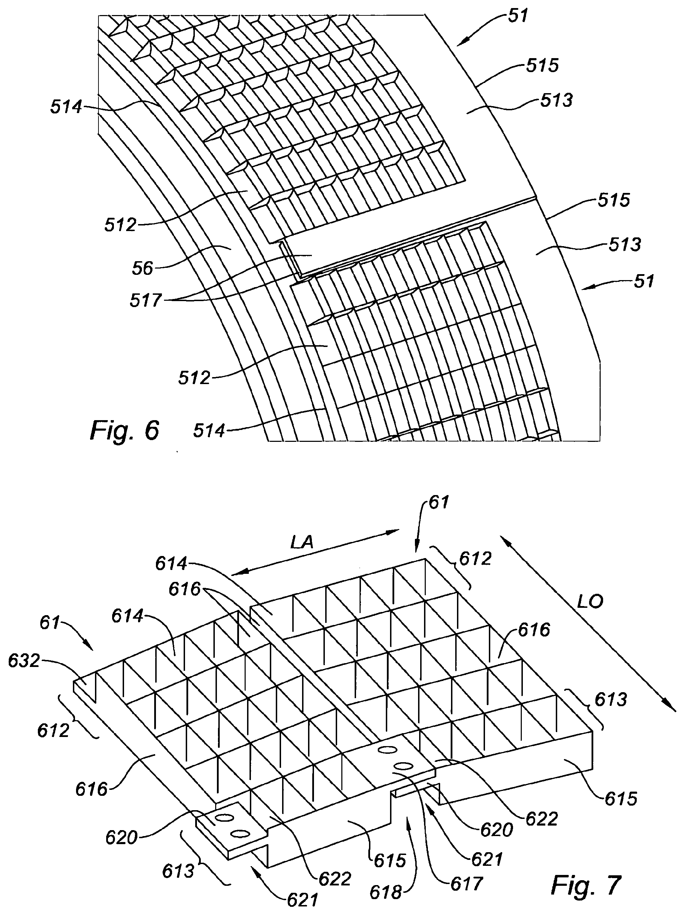

Comme visible sur la figure 6 qui illustre un assemblage de deux grilles autosupportées 51, chaque grille autosupportée 51 présente une partie amont 512 (parfois appelée partie avant) fixée sur le cadre avant 56 et une partie avale 513 opposée (parfois appelée partie arrière) libre, c'est-à-dire sans fixation à un cadre arrière. En outre, chaque grille autosupportée 51 présente deux bords latéraux opposés s'étendant sur toute la largeur de la grille autosupportée 51, à savoir un bord latéral amont 514 située dans la partie amont 512 et un bord latéral aval 515 située dans la partie avale 513 ; les bords latéraux 514, 515 des grilles autosupportées 51 forment les bords circonférentiels, ou périphériques, de l'assemblage de grilles 51 en situation dans l'inverseur de poussée 50, s'étendant de manière arquée autour de l'axe A de la nacelle.

Chaque grille autosupportée 51 présente également deux bords transversaux 516 opposés s'étendant sur toute la longueur de la grille autosupportée 51 ; les bords transversaux 516 des grilles autosupportées 51 forment les bords de jonction entre les grilles autosupportées 51 de l'assemblage de grilles en situation dans l'inverseur de poussée 50, ces bords transversaux 516 s'étendant sensiblement parallèlement à l'axe A de la nacelle.

Pour être assemblé entre elles, chaque grille autosupportée 51 présente deux bandes de matière 517, sensiblement parallèles aux faces frontales 510, 511, disposées sur les deux bords transversaux 516 et s'étendant sur sensiblement toute la longueur de la grille autosupportée 51. Ainsi, les bandes de matière 517 contigües de deux grilles autosupportées 51 adjacentes viennent en recouvrement l'une sur l'autre et sont fixées entre elles par des vis de fixation 518. Ainsi, dans cet assemblage, les grilles autosupportées 51 sont fixées les unes aux autre sur sensiblement toute leur longueur.

L'inconvénient principal de ce type d'assemblage est qu'il présente des bandes de matière 517 pleines à intervalles successifs, entre les grilles 51 et sur sensiblement toute la longueur des grilles 51, limitant ainsi la fonction de déviation du flux d'air froid en limitant la superficie des surfaces ajourées.

Comme il convient que la section traversante de ces grilles autosupportées 51 soit sensiblement égale à la section du canal annulaire 6, autrement dit de la veine d'air froid, il est important que la perte de section due à cette liaison des grilles autosupportées 51 entre elles doit être compensée par un surcroît de longueur de ces grilles autosupportées 51.

Or, la Demanderesse a constaté en pratique que des grilles autosupportées 51 trop longues ne réalisent pas efficacement la déviation du flux d'air froid dans leurs parties avales 513. En effet, plus la grille autosupportée 51 est longue et moins l'air passe efficacement au travers de toutes les alvéoles (ou aubes) de la grille, cela ayant pour conséquence de réduire l'efficacité de la déviation (et donc du freinage) lors de l'inversion de l'inversion de poussée.

Ainsi, la gestion des nappes du flux d'inversion est plus délicate à gérer avec un assemblage de plusieurs grille autosupportée 51 ; la souplesse obtenue avec l'emploi de plusieurs grilles individuelles assemblées entre elles, est perdue avec ce surcroît de longueur, et chaque grille autosupportée 51 ne peut être réutilisée sur un autre secteur périphérique de l'inverseur de poussée 50. Au final, le coût de cet assemblage de grilles autosupportée 51 devient alors supérieur à l'utilisation de grilles individuelles.

Un but de la présente invention est de fournir une grille autosupportée, et un assemblage de telles grilles autosupportées, qui permette de minimiser la perte de section de passage et la longueur de la grille autosupportée, autrement dit réaliser un assemblage de grilles de déviation sans ajout d'un cadre arrière et tout en minimisant la perte de section de passage afin de maîtriser les longueurs des grilles au minimum.

Un autre but de l'invention est de fournir une grille autosupportée qui permette de réaliser un assemblage d'environ une douzaine de grilles par demi-côté de l'inverseur de poussée afin de pouvoir optimiser la direction de sortie du flux d'inversion, autrement dit de permettre un pilotage des nappes d'inversion très souple et ainsi permettre d'utiliser une configuration spécifique d'aubage dans plusieurs positions, avec notamment pour objectif de limiter le coût global de l'assemblage de grilles et de la fonction d'inversion.

A cet effet, elle propose une grille de déviation du type autosupporté pour un inverseur de poussée à grilles d'une nacelle pour turboréacteur d'avion, ladite grille de déviation étant pourvue d'une pluralité d'alvéoles avec deux faces frontales ajourées opposées, comportant, d'une part :
- deux bords latéraux opposés s'étendant sur la largeur de la grille, à savoir un bord latéral amont située dans une partie amont et un bord latéral aval située dans une partie avale ;
- deux bords transversaux opposés s'étendant sur la longueur de la grille, à savoir un premier bord transversal et un second bord transversal ;
et comportant, d'autre part :
- des moyens de fixation amont ménagés sur le bord latéral amont et conçus pour la fixation de la grille sur une structure fixe de la nacelle telle qu'une structure de cadre avant ; et
- des premier et second moyens de liaison ménagés sur les respectivement premier et second bords transversaux pour relier la grille à deux grilles adjacentes en situation sur l'inverseur de poussée ;
la grille étant remarquable en ce que les premier et seconds moyens de liaison, dits premier et seconds moyens de liaison avale, sont disposés uniquement sur la partie avale de la grille pour relier ladite grille directement à deux grilles adjacentes uniquement dans sa partie avale, ladite partie avale correspondant à une zone s'étendant à partir du bord latéral aval sur une longueur inférieure ou égale à N fois la longueur de la dernière alvéole située le long dudit bord latéral aval, où N est inférieur à 3 et de préférence égal ou inférieur à 1.

Ainsi, l'invention propose de ne relier les grilles autosupportées directement entre elles que dans leurs parties avales respectives, autrement dit sur une longueur de liaison n'occupant pas plus de trois rangées d'alvéoles, et non sur sensiblement toute la longueur des grilles comme déjà connu de l'état de la technique. Bien entendu, les grilles autosupportées sont reliées entre elles dans leurs parties amonts via la structure fixe de la nacelle.

De la sorte, un assemblage de grilles conformes à l'invention présentera, à l'interface entre les grilles, des moyens de liaison entre les grilles uniquement en partie avale, sur au maximum trois rangées alvéoles, limitant ainsi l'impact négatif de ces moyens de liaison sur la déviation du flux secondaire. Chaque grille ne présente donc aucun moyen de liaison avec une ou plusieurs grilles adjacentes dans sa partie amont et dans sa partie centrale (située entre la partie amont et la partie avale et qui s'étend sur toute la longueur de la grille minorée d'au maximum trois rangées d'alvéoles), de sorte que l'assemblage de grilles présentera globalement une surface ajourée et continue dans sa partie amont et dans sa partie centrale, avec aucune surface pleine. Seule la partie avale de l'assemblage présentera une surface pleine, du fait de la présence des moyens de liaison avale entre les grilles. Ainsi, cette grille permet de minimiser la perte de section de passage tout en permettant de minimiser la longueur de la grille.

Conformément à l'invention, les moyens de liaison avale sont disposés uniquement dans la partie avale de la grille et ne s'étendent donc pas dans la partie centrale et dans la partie amont de la grille.

La partie avale de la grille correspond à une zone s'étendant le long du bord latéral aval de la grille et s'étendant au maximum à une distance dudit bord latéral aval inférieure ou égale à N fois la longueur de la dernière alvéole située le long dudit bord latéral aval, où N est inférieur à 3 et de préférence égal ou inférieur à 1. Autrement dit, les premiers et seconds moyens de liaison avale s'étendent en longueur, à partir du bord latéral aval, sur au maximum les trois dernières rangées d'alvéoles situées du côté du bord latéral aval, et de préférence sur au maximum la dernière rangée d'alvéoles

Ainsi, les moyens de liaison aval ne s'étendent pas plus loin que les trois dernières rangées d'alvéoles situées en partie avale de la grille, voire de préférence pas plus loin que la dernière rangée d'alvéoles situées en partie avale de la grille, impactant ainsi faiblement la superficie de surfaces ajourées globale de l'assemblage et donc la fonction de déviation. Il est également envisageable que les moyens de liaison aval s'étendent en longueur (dans le sens de la longueur de la grille) sur moins qu'une alvéole, autrement dit s'étendent en longueur sur une partie seulement de la dernière alvéole, et non sur sa totalité.

Au sens de l'invention, la longueur correspond à une dimension prise selon la direction longitudinale de la grille, cette direction longitudinale étant parallèle à l'axe A de la nacelle en situation sur l'inverseur de poussée et s'étendant du bord latéral amont jusqu'au bord latéral aval de la grille.

Au sens de l'invention, le bord latéral aval de la grille s'étend sur la largeur de la grille, en partie avale, et définit partiellement le bord circonférentiel ou périphériques aval de l'assemblage de grilles s'étendant de manière arquée autour de l'axe de la nacelle, en situation dans l'inverseur de poussée ; ce bord circonférentiel ou périphériques aval de l'assemblage de grilles étant libre et non supporté par un cadre arrière, car les grilles sont du type autosupporté.

De même, au sens de l'invention, le bord latéral amont de la grille s'étend sur la largeur de la grille, en partie amont du côté de la structure fixe de support amont de la grille, et définit partiellement le bord circonférentiel ou périphériques amont de l'assemblage de grilles s'étendant de manière arquée autour de l'axe de la nacelle, en situation dans l'inverseur de poussée.

Au sens de l'invention, la largeur correspond à une dimension prise selon la direction latérale de la grille, cette direction latérale étant sensiblement normale à la direction longitudinale de la grille et à l'axe A de la nacelle en situation sur l'inverseur de poussée et s'étendant entre les deux bords transversaux du bord latéral amont jusqu'au bord latéral aval de la grille.

Les moyens de liaison peuvent se présenter sous la forme de pattes de liaison qui s'étendent dans la partie avale de la grille, et plus spécifiquement dans les coins avals de la grille, afin de venir en recouvrement avec les pattes de liaison des grilles adjacentes.

Différentes variantes peuvent éventuellement être considérées seules ou en combinaison : pattes se superposant à la manière de tuiles, situées en recouvrement au moins partiel de la dernière alvéole aval de la grille et/ou situées dans le prolongement du bord aval de la grille.

Selon une première caractéristique, l'un au moins des premier et second moyens de liaison avale est disposé partiellement en retrait du bord transversal concerné.

Cette caractéristique est avantageuse pour que la liaison avale entre deux grilles s'effectue en retrait du plan de jonction entre les deux bords transversaux contigües des deux grilles, pour au final obtenir deux grilles jointes bord à bord avec ces deux bords transversaux sensiblement jointifs, pour que les alvéoles d'une grille soient prolongées sans discontinutité par les alvéoles de l'autre grille de part et d'autre de ce plan de jonction entre les deux bords transversaux.

De manière avantageuse, l'un des premier et second moyens de liaison avale est disposé partiellement en retrait par rapport au bord transversal concerné vers l'intérieur de la grille, et l'autre des premier et second moyens de liaison avale est disposé partiellement en retrait par rapport au bord transversal concerné vers l'extérieur de la grille.

De cette manière, un premier moyen de liaison avale d'une grille coopère avec un second moyen de liaison avale d'une autre grille, et cette coopération s'effectue en retrait du plan de jonction entre les deux bords transversaux contigües des deux grilles, car le moyen de liaison en retrait extérieur (ou en saillie) pourra coopérer avec l'autre moyen de liaison aval qui lui est retrait intérieur.

Dans une réalisation avantageuse, l'un des premier et second moyens de liaison avale présente au moins un orifice de passage d'un organe de fixation situé en retrait par rapport au bord transversal concerné vers l'intérieur de la grille, tandis que l'autre des premier et second moyens de liaison avale présente au moins un orifice de passage d'un organe de fixation situé en retrait par rapport au bord transversal concerné vers l'extérieur de la grille.

Ainsi, un premier moyen de liaison avale d'une grille coopère avec un second moyen de liaison avale d'une autre grille, et cette coopération s'effectue en retrait du plan de jonction entre les deux bords transversaux contigües des deux grilles, car l'orifice en retrait intérieur pourra coïncider avec l'autre orifice qui lui est retrait intérieur pour le passage d'un organe de fixation dans ces deux orifices.

Selon une possibilité de l'invention, le premier moyen de liaison avale comporte au moins une première patte de liaison et le second moyen de liaison avale comporte au moins une seconde patte de liaison.

Ainsi, la liaison entre deux grilles adjacentes s'effectuera par recouvrement et coopération d'au moins une première patte de liaison d'une grille avec au moins une seconde patte de liaison de l'autre grille.

De la sorte, une grille peut être assemblée à deux grilles adjacentes au moyen des première et seconde pattes de liaison. De même, une grille périphérique peut être assemblée à un élément de structure de l'inverseur de poussée encadrant l'assemblage de grilles, comme par exemple une poutre située en partie supérieure de la nacelle (à 12H), et qui comporterait une patte de liaison réceptrice complémentaire de l'une des pattes de liaison de la grille périphérique adjacente à cet élément de structure.

Dans un premier mode de réalisation, le premier moyen de liaison avale comporte au moins une première patte de liaison frontale et le second moyen de liaison avale comporte au moins une seconde patte de liaison frontale, chaque patte de liaison frontale s'étendant de manière sensiblement parallèle aux faces frontales ajourées de la grille.

Ainsi, cette première patte de liaison frontale est destinée à venir en recouvrement d'une seconde patte de liaison frontale d'une grille adjacente afin de permettre la liaison entre les deux grilles.

Chaque patte de liaison frontale est de préférence pourvue d'au moins un orifice de passage d'un organe de fixation, et éventuellement d'au moins un orifice de passage d'un organe de centrage.

Selon une caractéristique, la première patte de liaison frontale est disposée dans un premier coin aval de la grille et est située en recouvrement au moins partiel d'une alvéole située dans ledit premier coin aval, et la seconde patte de liaison frontale est disposée dans un second coin aval de la grille, opposé au premier coin aval, et est située en recouvrement au moins partiel d'une alvéole située dans ledit second coin aval.

Au sens de l'invention, il est entendu par coin aval de la grille l'espace en angle saillant formé en partie avale par deux bords de la grille, en l'occurrence le bord latéral aval et l'un des deux bords transversaux de la grille.

Au sens de l'invention, il est pour rappel entendu par bords transversaux de la grille les bords opposés qui s'étendent sur la longueur de la grille et qui forment les bords de jonction entre les grilles de l'assemblage de grilles en situation dans l'inverseur de poussée, ces bords transversaux s'étendant sensiblement parallèlement à l'axe de la nacelle.

Dans ce premier mode de réalisation, la présente invention concerne également les caractéristiques ci après :
- la seconde patte de liaison frontale est décalée par rapport à la première patte de liaison frontale, dans une direction sensiblement normale aux faces frontales ajourées de la grille, afin de venir en recouvrement avec une première patte de liaison frontale d'une grille adjacente identique, et dans ce cas l'assemblage de grilles peut comporter uniquement des grilles identiques conformes à l'invention ; ou en variante
- la seconde patte de liaison frontale est sensiblement coplanaire avec la première patte de liaison frontale, afin de venir en recouvrement avec une première patte de liaison frontale d'une grille adjacente, et dans ce cas l'assemblage de grilles comporte des premières grilles liées à des secondes grilles avec alternance entre première et seconde grilles.

Selon une possibilité de l'invention, la première patte de liaison frontale est en arasement avec l'une des deux faces frontales ajourées de la grille, de préférence la face frontale supérieure de la grille destinée à être située vers l'extérieur en situation sur l'inverseur de poussée, tandis que la seconde patte de liaison frontale est en retrait par rapport à cette face frontale de la grille dans une direction sensiblement normale aux faces frontales ajourées de la grille.

Selon une autre possibilité de l'invention, la première patte de liaison frontale et la seconde patte de liaison frontale sont en retrait par rapport aux deux faces frontales ajourées de la grille dans une direction sensiblement normale aux faces frontales ajourées de la grille.

Dans un second mode de réalisation (pouvant être pris seul ou en combinaison avec le premier mode de réalisation), le premier moyen de liaison avale comporte au moins une première patte de liaison latérale et le second moyen de liaison avale comporte au moins une seconde patte de liaison latérale, chaque patte de liaison latérale s'étendant de manière sensiblement parallèle au bord latéral aval.

Chaque patte de liaison latérale est de préférence pourvue d'au moins un orifice de passage d'un organe de fixation, et éventuellement d'au moins un orifice de passage d'un organe de centrage.

Ainsi, cette première patte de liaison latérale est destinée à venir en recouvrement d'une seconde patte de liaison latérale d'une grille adjacente afin de permettre la liaison entre les deux grilles.

Selon une première possibilité, la seconde patte de liaison latérale est décalée par rapport à la première patte de liaison latérale, dans une direction sensiblement normale au bord latéral aval de la grille, afin de venir en recouvrement avec une première patte de liaison latérale d'une grille adjacente similaire.

Selon une seconde possibilité, la seconde patte de liaison latérale est coplanaire avec la première patte de liaison latérale, afin de venir en recouvrement avec une première patte de liaison latérale d'une grille adjacente distincte.

Selon une autre caractéristique, la première patte de liaison latérale et/ou la seconde patte de liaison latérale présente :
- une paroi supérieure sensiblement parallèle et coplanaire à une face frontale supérieure de la grille, afin de venir en appui contre un bord supérieur de la patte frontale complémentaire avec qui ladite patte coopérera pour assurer la liaison ; et/ou
- une paroi inférieure sensiblement parallèle et coplanaire à une face frontale inférieure de la grille, afin de venir en appui contre un bord inférieur de la patte frontale complémentaire avec qui ladite patte coopérera pour assurer la liaison.

L'invention se rapporte également à un assemblage de grilles pour un inverseur de poussée à grilles, comportant au moins une première, une deuxième et une troisième grilles successives conformes à l'invention, dans lequel :
- la première grille est reliée à la deuxième grille par coopération complémentaire entre le premier moyen de liaison avale ménagé sur le premier bord transversal de la première grille et le second moyen de liaison avale ménagé sur le second bord transversal de la second grille, le premier bord transversal de la première grille étant sensiblement jointif du second bord transversal de la second grille hormis dans la zone où sont ménagés lesdits moyens de liaison avale ; et
- la deuxième grille est reliée à la troisième grille par coopération complémentaire entre le premier moyen de liaison avale ménagé sur le premier bord transversal de la deuxième grille et le second moyen de liaison avale ménagé sur le second bord transversal de la troisième grille, le premier bord transversal de la deuxième grille étant sensiblement jointif du second bord transversal de la troisième grille hormis dans la zone où sont ménagés lesdits moyens de liaison avale.

L'invention se rapporte aussi à une nacelle pour turboréacteur d'avion comportant un inverseur de poussée à grilles équipé d'au moins un assemblage conforme à l'invention, où les grilles de l'assemblage sont fixées dans leurs parties amonts, avec leurs moyens de fixation amont respectifs, sur une structure fixe de la nacelle telle qu'une structure de cadre avant, et où les grilles de l'assemblage sont reliées directement entre elles uniquement dans leurs parties avales respectives par leurs moyens de liaison avale.

D'autres caractéristiques et avantages de la présente invention apparaîtront à la lecture de la description détaillée ci-après, de trois exemples de mise en oeuvre non limitatifs, faite en référence aux figures annexées dans lesquelles :
- la figure 1, déjà commentée, est une vue schématique en coupe longitudinale d'une déjà commentée, est une vue schématique en coupe longitudinale d'une nacelle pour turboréacteur d'avion ;
- les figures 2 et 3, déjà commentées, sont des vues schématiques partielles en coupe longitudinale d'un inverseur de poussée à grilles classique, dans des positions respectivement dites jet inverse et jet direct ;
- la figure 4, déjà commentée, est une vue schématique en coupe transversale d'un inverseur de poussée connu équipé d'un assemblage de grilles autosupportées ;
- la figure 5, déjà commentée, est une vue agrandie de la zone V de la figure 4 ;
- la figure 6, déjà commentée, est une vue schématique en perspective de deux grilles autosupportées équipant l'inverseur de poussée illustré sur la figure 4 ;
- la figure 7 est une vue schématique en perspective de deux grilles conformes à un premier mode de réalisation et assemblées entre elles ;
- la figure 8 est une vue schématique en perspective et partiel de deux grilles conformes au premier mode de réalisation avant d'être assemblées entre elles ;
- la figure 9a est une vue schématique en coupe selon la ligne AA' des deux grilles de la figure 8 une fois assemblées entre elles ;
- la figures 9b est une vue schématique en coupe, identique à celle de la figure 9a, de deux grilles assemblées et conformes au premier mode de réalisation ;
- la figures 9c est une vue schématique en coupe, identique à celle de la figure 9a, de deux grilles assemblées et conformes au premier mode de réalisation ;
- la figure 10a est une vue schématique en perspective et partiel de deux grilles conformes à un second mode de réalisation avant d'être assemblées entre elles ;
- la figure 10b est une vue schématique en perspective et partiel des deux grilles de la figure 10a une fois assemblées entre elles ;
- la figure 11 est une vue schématique en perspective et partiel de deux grilles conformes au second mode de réalisation et assemblées entre elles ;
- la figure 12 est une vue schématique de côté de deux grilles assemblées conformes à un troisième mode de réalisation résultant de la combinaison des premier et second modes de réalisation.

Sur l'ensemble de ces figures, des références identiques ou analogues désignent des organes ou ensemble d'organes identiques et analogues.

Les figures 7 à 9 illustrent des assemblages de grilles 61 autosupportées conformes à un premier mode de réalisation de l'invention.

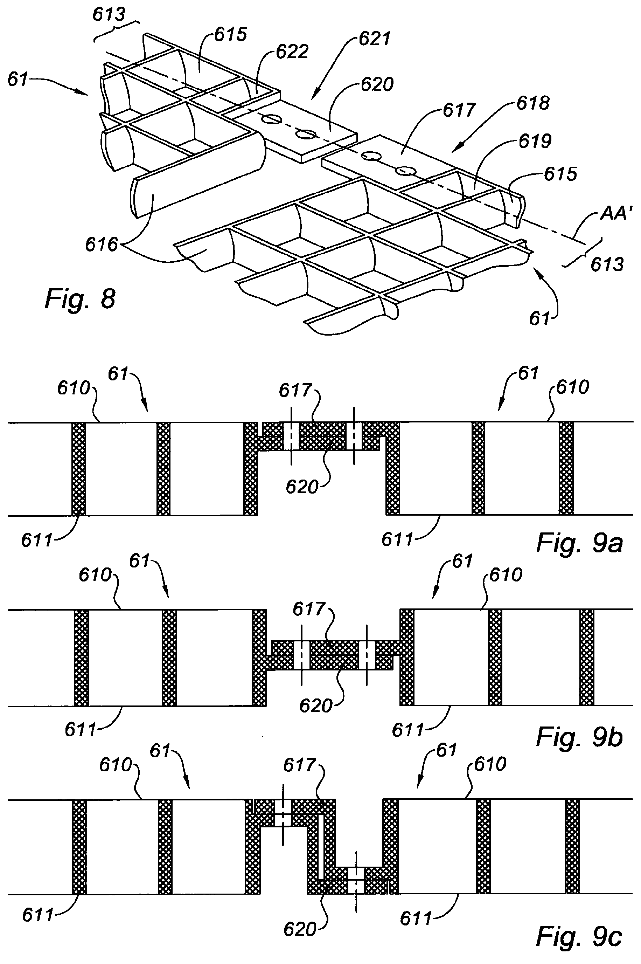

Chaque grille 61 est pourvue d'une pluralité d'alvéoles et présentent deux faces frontales ajourées opposées, en l'occurrence une face frontale supérieure 610 et une face frontale inférieure 611 visibles sur les figures 9a à 9c.

Chaque grille 61 présente une partie amont 612 destinée à être fixée sur un cadre avant (non visible) et une partie avale 613 opposée libre, c'est-à-dire sans fixation à un cadre arrière.

En outre, chaque grille 61 présente deux bords latéraux opposés s'étendant sur toute la largeur LA de la grille 61, à savoir un bord latéral amont 614 située dans la partie amont 612 et un bord latéral aval 615 située dans la partie avale 613 ; les bords latéraux 614, 615 des grilles 61 formant les bords circonférentiels, ou périphériques, de l'assemblage de grilles 61 en situation dans l'inverseur de poussée, et s'étendant de manière arquée autour de l'axe de la nacelle.

Pour la fixation de la partie amont 612 de la grille 61 sur le cadre avant, cette partie amont 612 présente une paroi de fixation 632 sur le cadre avant, cette paroi de fixation 632 s'étendant parallèlement aux faces frontales 610, 611 et faisant saillie du bord latéral amont 614, le long de la première rangée d'alvéoles. Cette paroi de fixation 632 forme ainsi une corniche qui viendra en appui contre le cadre avant afin de pouvoir être fixée dessus.

La partie avale 613 de la grille 61 correspond à une zone s'étendant le long du bord latéral aval 615 de la grille 61 et s'étendant au maximum à une distance dudit bord latéral aval 615 inférieure à la longueur des trois dernières rangées d'alvéoles (en l'occurrence inférieure à la longueur de la dernière rangée d'alvéoles) situées le long de ce bord latéral aval 615.

Chaque grille 61 présente également deux bords transversaux 616 opposés s'étendant sur toute la longueur LO de la grille 61 ; les bords transversaux 616 des grilles 61 formant les bords de jonction entre les grilles 61 de l'assemblage de grilles en situation dans l'inverseur de poussée, ces bords transversaux 616 s'étendant sensiblement parallèlement à l'axe de la nacelle.

Pour assembler ces deux grilles 61, l'une des grilles 61 (celle de gauche sur la figure 7 ou de droite sur les figures 8 et 9) comporte une première patte de liaison frontale 617 disposée dans la partie avale 613, pourvue d'un orifice de passage d'un organe de fixation et éventuellement d'un orifice de passage d'un organe de centrage, et qui s'étend de manière sensiblement coplanaire aux faces frontales 610, 611 ajourées de la grille 61. Cette première patte de liaison frontale 617 ne s'étendent en longueur pas plus loin que la dernière rangée d'alvéoles situées en partie avale 613 de la grille 61.

Plus spécifiquement, cette première patte de liaison frontale 617 est disposée dans un premier coin aval 618 de la grille 61, en partie avale 613 de la grille 61, et est située en recouvrement au moins partiel de la dernière alvéole 619 située dans ce premier coin aval 618. Il est à noter que le recouvrement opposé peut de même être appliqué.

Pour assembler ces deux grilles 61, l'autre grille 61 (celle de droite sur la figure 7 ou de gauche sur les figures 8 et 9) comporte une seconde patte de liaison frontale 620 disposée dans la partie avale 613, pourvue d'un orifice de passage d'un organe de fixation et éventuellement d'un orifice de passage d'un organe de centrage, et qui s'étend de manière sensiblement coplanaire aux faces frontales 610, 611 ajourées de la grille 61. Cette seconde patte de liaison frontale 620 ne s'étendent en longueur pas plus loin que la dernière rangée d'alvéoles situées en partie avale 613 de la grille 61.

Plus spécifiquement, cette seconde patte de liaison frontale 620 est disposée dans un second coin aval 621 de la grille 61, opposée au premier coin aval 618 de cette même grille 61, et est située en recouvrement au moins partiel de la dernière alvéole 622 située dans ce second coin aval 621.

La seconde patte de liaison frontale 620 de la grille 61 de gauche est décalée par rapport à la première patte de liaison frontale 617 de la grille 61 de droite, dans une direction sensiblement normale aux faces frontales 610, 611 ajourées des grilles 61, afin de venir en recouvrement l'une sur l'autre, de manière à faire coïncider les orifices ménagés dans ces pattes de liaison frontale 617, 620 pour engager les organes de fixation et de centrage qui finaliseront l'assemblage entre les deux grilles 61. L'assemblage se fait donc par accostage des pattes de liaison frontale 617, 620 l'une sur l'autre.

Sur la figure 7, on note que les orifices de la première patte de liaison frontale 617 sont situés en retrait par rapport au bord transversal 616 concerné vers l'extérieur de la grille, tandis que les orifices de la seconde patte de liaison frontale 620 sont situés en retrait par rapport au bord transversal 616 concerné vers l'intérieur de la grille 61, pour permettre à ces deux bords transversaux 616 d'être sensiblement jointifs. Il en est de même sur la figure 8, avec des orifices en retrait par rapport aux bords transversaux concernés.

Les pattes de liaison frontale 617, 620 dépassent des bords transversaux 616, pour permettre que les bords transversaux 616 contigües de deux grilles 61 adjacentes viennent sensiblement l'un contre l'autre, au jeu de montage près. Plus spécifiquement, les pattes de liaison frontale 617, 620 se trouve en débordement des bords transversaux 616 concernés d'environ de la moitié de leurs largeur (dimension prise dans le sens de la largeur LA de la grille 61). Autrement dit, on note que :
- la première patte de liaison frontale 617 présente une partie en retrait par rapport au bord transversal 616 concerné vers l'intérieur de la grille 61 (en l'occurrence la partie située dans la dernière alvéole 619 de coin), et une partie en retrait par rapport au bord transversal 616 concerné vers l'extérieur de la grille 61 (en l'occurrence son extrémité libre qui dépasse ou saille hors du bord transversal 616) ; et
- la seconde patte de liaison frontale 620 présente une partie en retrait par rapport au bord transversal 616 concerné vers l'intérieur de la grille 61 (en l'occurrence la partie située dans la dernière alvéole 622 de coin), et une partie en retrait par rapport au bord transversal 616 concerné vers l'extérieur de la grille 61 (en l'occurrence son extrémité libre qui dépasse ou saille hors du bord transversal 616).

La ou chaque grille 61 (celle de gauche sur la figure 7) peut comporter à la fois une première patte de liaison frontale 617 et une seconde patte de liaison frontale 620 du même type que celles décrites ci-dessus afin de permettre l'assemblage de la grille 61 avec deux grilles adjacentes identiques ou similaires. Au sein d'une même grille 61, la seconde patte de liaison frontale 620 de la grille 61 peut être est décalée par rapport à la première patte de liaison frontale 617 de cette même grille 61, dans une direction sensiblement normale aux faces frontales 610, 611 ajourées de la grille 61, afin que cette seconde patte de liaison frontale 620 puisse venir en recouvrement d'une première patte de liaison frontale 617 d'une grille 61 adjacente identique.

Dans une variante non illustrée, au sein d'une même grille, la seconde patte de liaison frontale est sensiblement coplanaire avec la première patte de liaison frontale, de sorte qu'il est nécessaire pour l'assemblage d'employer des premières grilles et des secondes grilles différentes (du moins dans la localisation des pattes de liaison frontale) avec alternance entre première et seconde grilles.

Dans les exemples des figures 7, 8 et 9a, la première patte de liaison frontale 617 est en arasement avec la face frontale supérieure 610 de la grille 61, tandis que la seconde patte de liaison frontale 620 est en retrait par rapport à la face frontale supérieure 610 de la grille 61.

Dans l'exemple de la figure 9b, la première patte de liaison frontale 617 et la seconde patte de liaison frontale 620 sont en retrait par rapport aux deux faces frontales 610, 611 ajourées de la grille 61. Ainsi, selon la répartition de chargement désirée sur les grilles, les pattes de liaison frontale 617, 620 peuvent être positionnées différemment dans l'épaisseur de la grille.

Dans l'exemple de la figure 9c, la première patte de liaison frontale 617 et la seconde patte de liaison frontale 620 sont en marche d'escalier et présentent chacune, d'une part, une embase en retrait de l'une des faces frontales 610, 611 de la grille 61 concernée et, d'autre part, une extrémité libre qui vient en arasement avec l'autre face frontale 610, 611 de la grille 61 contigüe.

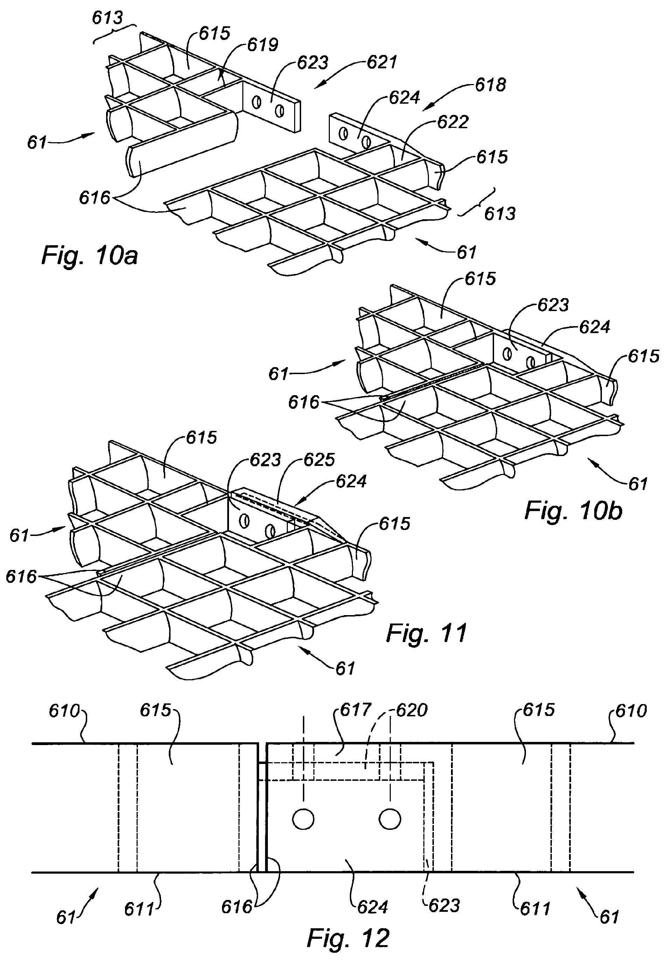

Les figures 10 et 11 illustrent des assemblages de grilles 61 autosupportées conformes à un second mode de réalisation de l'invention. Ces grilles 61 sont du même type que celles décrites ci-dessus pour le premier mode de réalisation, à l'exception des moyens de liaison avale employés pour relier entre elles les parties avales 613 de deux grilles 61 adjacentes.

Pour assembler deux grilles 61 entre elles, l'une des grilles 61 (celle de gauche sur les figures 10 et 11) comporte une première patte de liaison latérale 623 disposée dans la partie avale 613, pourvue d'un orifice de passage d'un organe de fixation et éventuellement d'un orifice de passage d'un organe de centrage, et qui s'étend de manière sensiblement orthogonale aux faces frontales 610, 611 ajourées de la grille 61. Cette première patte de liaison latérale 623 s'étend sensiblement parallèlement au bord latéral aval 615 de la grille 61, de manière coplanaire à ce bord latéral aval 615.

Plus spécifiquement, cette première patte de liaison latérale 623 est disposée dans le premier coin aval 618 de la grille 61 et est située en recouvrement au moins partiel de la dernière alvéole 619 située dans ce premier coin aval 618.

Pour assembler ces deux grilles 61, l'autre grille 61 (celle de droite sur les figures 10 et 11) comporte une seconde patte de liaison latérale 624 disposée dans la partie avale 613, pourvue d'un orifice de passage d'un organe de fixation et éventuellement d'un orifice de passage d'un organe de centrage, et qui s'étend de manière sensiblement orthogonale aux faces frontales 610, 611 ajourées de la grille 61. Cette seconde patte de liaison latérale 624 s'étend sensiblement parallèlement au bord latéral aval 615 de la grille 61, de manière décalée par rapport à ce bord latéral aval 615.

Plus spécifiquement, cette seconde patte de liaison latérale 624 est disposée dans le second coin aval 621 de la grille 61, opposée au premier coin aval 618 de cette même grille 61, et est située en recouvrement au moins partiel de la dernière alvéole 622 située dans ce second coin aval 621.

La seconde patte de liaison latérale 624 de la grille 61 de droite est décalée par rapport à la première patte de liaison latérale 623 de la grille 61 de gauche, dans une direction sensiblement normale aux bords latéraux avals 615 des grilles 61, afin de venir en recouvrement l'une sur l'autre, de manière à faire coïncider les orifices ménagés dans ces pattes de liaison latérale 623, 624 pour engager les organes de fixation et de centrage qui finaliseront l'assemblage entre les deux grilles 61. L'assemblage se fait donc par accostage des pattes de liaison latérale 623, 624 l'une sur l'autre.

On note que les deux orifices de la première patte de liaison latérale 623 sont situés en retrait par rapport au bord transversal 616 concerné respectivement vers l'intérieur et vers l'extérieur de la grille 61, et que les orifices de la seconde patte de liaison latérale 624 sont situés en retrait par rapport au bord transversal 616 concerné respectivement vers l'extérieur et vers l'intérieur de la grille 61, pour permettre à ces deux bords transversaux 616 d'être sensiblement jointifs.

Les pattes de liaison latérale 623, 624 dépassent des bords transversaux 616, pour permettre que les bords transversaux 616 contigües de deux grilles 61 adjacentes viennent sensiblement l'un contre l'autre, au jeu de montage près. Plus spécifiquement, les pattes de liaison latérale 623, 624 se trouve en débordement des bords transversaux 616 concernés d'environ de la moitié de leurs largeur (dimension prise dans le sens de la largeur LA de la grille 61). Autrement dit, on note que :
- la première patte de liaison latérale 623 présente une partie en retrait par rapport au bord transversal 616 concerné vers l'intérieur de la grille 61 (en l'occurrence la partie située dans la dernière alvéole 619 de coin), et une partie en retrait par rapport au bord transversal 616 concerné vers l'extérieur de la grille 61 (en l'occurrence son extrémité libre qui dépasse ou saille hors du bord transversal 616) ; et
- la seconde patte de liaison latérale 624 présente une partie en retrait par rapport au bord transversal 616 concerné vers l'intérieur de la grille 61 (en l'occurrence la partie située dans la dernière alvéole 622 de coin), et une partie en retrait par rapport au bord transversal 616 concerné vers l'extérieur de la grille 61 (en l'occurrence son extrémité libre qui dépasse ou saille hors du bord transversal 616).

La ou chaque grille 61 peut comporter à la fois une première patte de liaison latérale 623 et une seconde patte de liaison latérale 624 du même type que celles décrites ci-dessus afin de permettre l'assemblage de la grille 61 avec deux grilles adjacentes identiques ou similaires. Au sein d'une même grille 61, la seconde patte de liaison latérale 624 de la grille 61 peut être est décalée par rapport au bord latéral aval 615 tandis que la première patte de liaison latérale 623 de cette même grille 61 est sensiblement coplanaire à ce bord latéral aval 615, de sorte que cette seconde patte de liaison latérale 624 puisse venir en recouvrement d'une première patte de liaison latérale 623 d'une grille 61 adjacente identique.

Dans une variante non illustrée, au sein d'une même grille, la première patte de liaison latérale et la seconde patte de liaison latérale sont toutes deux coplanaires, ou alors toutes deux décalées, par rapport au bord latéral aval, de sorte qu'il est nécessaire pour l'assemblage d'employer des premières grilles et des secondes grilles différentes (du moins dans la localisation des pattes de liaison latérale) avec alternance entre première et seconde grilles.

Dans un perfectionnement illustré sur la figure 11, la seconde patte de liaison latérale 624 présente une paroi supérieure 625 sensiblement parallèle et coplanaire à la face frontale supérieure 610 de la grille 61, de manière à venir en appui contre le bord supérieur de la première patte de liaison latérale 623 de la grille 61 adjacente, renforçant ainsi la liaison entre les deux grilles 61. En variante ou en complément, la seconde patte de liaison latérale 624 présente une paroi inférieure (non visible) sensiblement parallèle et coplanaire à la face frontale inférieure 611 de la grille 61, de manière à venir en appui contre le bord inférieur de la première patte de liaison latérale 623 de la grille 61 adjacente.

Dans une variante non illustrée, la première patte de liaison latérale présente une paroi supérieure et/ou une paroi inférieure sensiblement parallèles et coplanaires aux faces frontales respectivement supérieure et inférieure de la grille, de manière à venir en appui contre les bords respectivement supérieur et inférieur de la seconde patte de liaison latérale.

La figure 12 illustre un assemblage de grilles 61 autosupportées conformes à un troisième mode de réalisation de l'invention résultant de la combinaison des premier et second modes de réalisation. Dans ce troisième mode de réalisation, la grille 61 comporte à la fois des pattes de liaison frontale 617, 620 et des pattes de liaison latérale 623, 624 pour assurer la liaison entre deux grilles 61 adjacentes ; ces pattes de liaison 617, 620, 623, 624 étant conformes à la description précédente.

Bien entendu l'exemple de mise en oeuvre évoqué ci-dessus ne présente aucun caractère limitatif et d'autres améliorations et détails peuvent être apportés à la grille selon l'invention, sans pour autant sortir du cadre de l'invention où d'autres formes de moyens de liaison aval et/ou de pattes de liaison peuvent par exemple être réalisées.

## Revendications

1. Grille (61) de déviation du type autosupporté pour un inverseur de poussée à grilles d'une nacelle pour turboréacteur d'avion, ladite grille (61) de déviation étant pourvue d'une pluralité d'alvéoles avec deux faces frontales (610, 611) ajourées opposées, comportant, d'une part :
- deux bords latéraux opposés s'étendant sur la largeur de la grille (61), à savoir un bord latéral amont (614) située dans une partie amont (612) et un bord latéral aval (615) située dans une partie avale (613) ;
- deux bords transversaux (616) opposés s'étendant sur la longueur de la grille (61), à savoir un premier bord transversal et un second bord transversal ;
et comportant, d'autre part :
- des moyens de fixation amont (632) ménagés sur le bord latéral amont (614) et conçus pour la fixation de la grille (61) sur une structure fixe de la nacelle telle qu'une structure de cadre avant ; et
- des premier et second moyens de liaison (617, 620 ; 623, 624) ménagés sur les respectivement premier et second bords transversaux (616) pour relier la grille (61) à deux grilles (61) adjacentes en situation sur l'inverseur de poussée ;
**caractérisée en ce que** les premier et seconds moyens de liaison (617, 620 ; 623, 624), dits premier et seconds moyens de liaison avale, sont disposés uniquement sur la partie avale (613) de la grille (61) pour relier ladite grille (61) directement à deux grilles (61) adjacentes uniquement dans sa partie avale (613), ladite partie avale (613) correspondant à une zone s'étendant à partir du bord latéral aval (615) sur une longueur inférieure ou égale à N fois la longueur de la dernière alvéole située le long dudit bord latéral aval (615), où N est inférieur à 3 et de préférence égal ou inférieur à 1.

2. Grille (61) selon la revendication 1, dans lequel l'un au moins des premier et second moyens de liaison avale (617, 620 ; 623, 624) est disposé partiellement en retrait du bord transversal concerné.

3. Grille (61) selon la revendication 2, dans lequel l'un des premier et second moyens de liaison avale (617, 620 ; 623, 624) est disposé partiellement en retrait par rapport au bord transversal (616) concerné vers l'intérieur de la grille (61), et l'autre des premier et second moyens de liaison avale (617, 620 ; 623, 624) est disposé partiellement en retrait par rapport au bord transversal (616) concerné vers l'extérieur de la grille (61).

4. Grille (61) selon l'une quelconque des revendications 1 à 3, dans lequel l'un des premier et second moyens de liaison avale (620 ; 623, 624) présente au moins un orifice de passage d'un organe de fixation situé en retrait par rapport au bord transversal (616) concerné vers l'intérieur de la grille (61), tandis que l'autre des premier et second moyens de liaison avale (617 ; 623, 624) présente au moins un orifice de passage d'un organe de fixation situé en retrait par rapport au bord transversal (616) concerné vers l'extérieur de la grille (61).

5. Grille (61) selon l'une quelconque des revendications 1 à 4, dans lequel le premier moyen de liaison avale comporte au moins une première patte de liaison (617 ; 623) et le second moyen de liaison avale comporte au moins une seconde patte de liaison (620 ; 624).

6. Grille (61) selon la revendication 5, dans lequel le premier moyen de liaison avale comporte au moins une première patte de liaison frontale (617) et le second moyen de liaison avale comporte au moins une seconde patte de liaison frontale (620), chaque patte de liaison frontale (617, 620) s'étendant de manière sensiblement parallèle aux faces frontales (610, 611) ajourées de la grille (61).

7. Grille (61) selon la revendication 6, dans lequel la première patte de liaison frontale (617) est disposée dans un premier coin aval (618) de la grille (61) et est située en recouvrement au moins partiel d'une alvéole (619) située dans ledit premier coin aval (618), et la seconde patte de liaison frontale (620) est disposée dans un second coin aval (621) de la grille (61), opposé au premier coin aval (618), et est située en recouvrement au moins partiel d'une alvéole (622) située dans ledit second coin aval (621).

8. Grille (61) selon les revendications 6 ou 7, dans lequel la première patte de liaison frontale (617) est en arasement avec l'une des deux faces frontales (610, 611) ajourées de la grille (61), de préférence la face frontale supérieure (610) de la grille (61) destinée à être située vers l'extérieur en situation sur l'inverseur de poussée, tandis que la seconde patte de liaison frontale (620) est en retrait par rapport à cette face frontale de la grille (61) dans une direction sensiblement normale aux faces frontales ajourées de la grille.

9. Grille (61) selon les revendications 6 ou 7, dans lequel la première patte de liaison frontale (617) et la seconde patte de liaison frontale (620) sont en retrait par rapport aux deux faces frontales (610, 611) ajourées de la grille (61) dans une direction sensiblement normale aux faces frontales ajourées de la grille.

10. Grille (61) selon l'une quelconque des revendications 5 à 9, dans lequel le premier moyen de liaison avale comporte au moins une première patte de liaison latérale (623) et le second moyen de liaison avale comporte au moins une seconde patte de liaison latérale (624), chaque patte de liaison latérale (623, 624) s'étendant de manière sensiblement parallèle au bord latéral aval (615).

11. Grille (61) selon la revendication 10, dans lequel la première patte de liaison latérale (623) est disposée dans un premier coin aval (618) de la grille (61), de manière coplanaire ou décalée par rapport audit bord latéral aval (615), et la seconde patte de liaison latérale (624) est disposée dans un second coin aval (621) de la grille (61), opposé au premier coin aval (618).

12. Grille (61) selon les revendications 10 ou 11, dans lequel la première patte de liaison latérale (623) et/ou la seconde patte de liaison latérale (624) présente :
- une paroi supérieure (625) sensiblement parallèle et coplanaire à une face frontale (610) supérieure de la grille (61), et/ou
- une paroi inférieure sensiblement parallèle et coplanaire à une face frontale (611) inférieure de la grille (61).

13. Assemblage de grilles (61) pour un inverseur de poussée à grilles, comportant au moins une première, une deuxième et une troisième grilles (61) successives conformes à l'une quelconque des revendications précédentes, dans lequel :
- la première grille (61) est reliée à la deuxième grille (61) par coopération complémentaire entre le premier moyen de liaison avale (617 ; 623) ménagé sur le premier bord transversal (616) de la première grille (61) et le second moyen de liaison avale (620 ; 624) ménagé sur le second bord transversal (616) de la second grille (61), le premier bord transversal (616) de la première grille (61) étant sensiblement jointif du second bord transversal (616) de la second grille (61) hormis dans la zone où sont ménagés lesdits moyens de liaison avale ; et
- la deuxième grille (61) est reliée à la troisième grille (61) par coopération complémentaire entre le premier moyen de liaison avale (617 ; 623) ménagé sur le premier bord transversal (616) de la deuxième grille (61) et le second moyen de liaison avale (620 ; 624) ménagé sur le second bord transversal (616) de la troisième grille (61), le premier bord transversal (616) de la deuxième grille (61) étant sensiblement jointif du second bord transversal (616) de la troisième grille (61) hormis dans la zone où sont ménagés lesdits moyens de liaison avale.

14. Nacelle pour turboréacteur d'avion comportant un inverseur de poussée à grilles équipé d'au moins un assemblage conforme à la revendication 13, où les grilles (61) de l'assemblage sont fixées dans leurs parties amonts (612), avec leurs moyens de fixation amont respectifs, sur une structure fixe de la nacelle telle qu'une structure de cadre avant, et où les grilles (61) de l'assemblage sont reliées directement entre elles uniquement dans leurs parties avales (613) respectives par leurs moyens de liaison avale (617, 620 ; 623, 624).

## Patentansprüche

1. Umlenkgitter (61) in der Art eines selbsttragenden Gitters für eine Schubumkehr mit Gittern einer Gondel für ein Flugzeug-Turbotriebwerk, wobei das besagte Umlenkgitter (61) mit einer Vielzahl von Zellen mit zwei gegenüber liegenden durchbrochenen Stirnseiten (610, 611) versehen ist, einerseits folgendes umfassend:
- zwei gegenüber liegende Seitenränder, die sich über die Breite des Gitters (61) erstrecken, nämlich einen vorgelagerten Seitenrand (614), der sich in einem vorgelagerten Teil (612) befindet, und einen nachgelagerten Seitenrand (615), der sich in einem nachgelagerten Teil (613) befindet;
- zwei gegenüber liegende quer verlaufende Ränder (616), die sich über die Länge des Gitters (61) hinweg erstrecken, nämlich einen ersten quer verlaufenden Rand und einen zweiten quer verlaufenden Rand;
und andererseits folgendes umfassend:
- vorgelagerte Befestigungsmittel (632), die am vorgelagerten Seitenrand (614) angeordnet sind und zur Befestigung des Gitters (61) an einer festen Struktur der Gondel, wie einer vorderen Rahmenstruktur gestaltet sind; und
- erste und zweite Verbindungsmittel (617, 620, 623, 624), die auf jeweils den ersten und zweiten quer verlaufenden Rändern (616) angeordnet sind, um das Gitter (61) mit zwei benachbarten Gittern (61), die auf der Schubumkehr gelegen sind, zu verbinden;
**dadurch gekennzeichnet, dass** die ersten und zweiten Verbindungsmittel (617, 620, 623, 624), die erste und zweite nachgelagerte Verbindungsmittel genannt werden, nur auf dem nachgelagerten Teil (613) des Gitters (61) angeordnet sind, um das besagte Gitter (61) direkt mit zwei benachbarten Gittern (61) nur in seinem nachgelagerten Teil (613) zu verbinden, wobei der besagte nachgelagerte Teil (613) einer Zone entspricht, die sich ab dem nachgelagerten Seitenrand (615) über eine Länge kleiner oder gleich N-mal der Länge der letzten Zelle erstreckt, die sich entlang des besagten nachgelagerten Seitenrandes (615) befindet, wobei N kleiner 3 und vorzugsweise kleiner oder gleich 1 ist.

2. Gitter (61) nach Anspruch 1, wobei zumindest das eine der ersten und zweiten nachgelagerten Verbindungsmittel (617, 620; 623, 624) teilweise vom betreffenden quer verlaufenden Rand zurückgesetzt angeordnet ist.

3. Gitter (61) nach Anspruch 2, wobei das eine der ersten und zweiten nachgelagerten Verbindungsmittel (617, 620; 623, 624) teilweise zurückgesetzt im Verhältnis zum betreffenden quer verlaufenden Rand (616) innen am Gitter (61) angeordnet ist, und das andere der ersten und zweiten nachgelagerten Verbindungsmittel (617, 620; 623, 624) teilweise zurückgesetzt im Verhältnis zum betreffenden quer verlaufenden Rand (616) außen am Gitter (61) angeordnet ist.

4. Gitter (61) nach irgendeinem der Ansprüche 1 bis 3, wobei das eine der ersten und zweiten nachgelagerten Verbindungsmittel (620; 623, 624) zumindest eine Durchgangsöffnung für ein Befestigungselement aufweist, das sich im Verhältnis zum betreffenden quer verlaufenden Rand (616) nach innen am Gitter (61) zurückgesetzt befindet, während das andere der ersten und zweiten nachgelagerten Verbindungsmittel (617; 623, 624) zumindest eine Durchgangsöffnung für ein Befestigungselement aufweist, das sich im Verhältnis zum betreffenden quer verlaufenden Rand (616) nach außen am Gitter (61) zurückgesetzt befindet.

5. Gitter (61) nach irgendeinem der Ansprüche 1 bis 4, wobei das erste nachgelagerte Verbindungsmittel zumindest eine erste Verbindungslasche (617; 623) umfasst, und das zweite nachgelagerte Verbindungsmittel zumindest eine zweite Verbindungslasche (620; 624) umfasst.

6. Gitter (61) nach Anspruch 5, wobei das erste nachgelagerte Verbindungsmittel zumindest eine erste stirnseitige Verbindungslasche (617) umfasst und das zweite nachgelagerte Verbindungsmittel zumindest eine zweite stirnseitige Verbindungslasche (620) umfasst, wobei sich jede stirnseitige Verbindungslasche (617, 620) in etwa parallel zu den durchbrochenen Stirnseiten (610, 611) des Gitters (61) erstrecken.

7. Gitter (61) nach Anspruch 6, wobei die erste stirnseitige Verbindungslasche (617) in einer ersten nachgelagerten Ecke (618) des Gitters (61) angeordnet ist, und sich in zumindest einer teilweisen Überlappung auf einer Zelle (619) befindet, die sich in der besagten ersten nachgelagerten Ecke (618) befindet, und die zweite stirnseitige Verbindungslasche (620) in einer zweiten nachgelagerten Ecke (621) des Gitters (61) gegenüber der ersten nachgelagerten Ecke (618) angeordnet ist, und sich in zumindest einer teilweisen Überlappung auf einer Zelle (622) befindet, die sich in der besagten zweiten nachgelagerten Ecke (621) befindet.

8. Gitter (61) nach den Ansprüchen 6 oder 7, wobei die erste stirnseitige Verbindungslasche (617) bündig mit der einen der beiden durchbrochenen Stirnseiten (610, 611) des Gitters (61), und vorzugsweise der oberen Stirnseite (610) des Gitters (61) ist, die dazu bestimmt ist, sich nach außen an der Schubumkehr gelegen situiert zu werden, während die zweite stirnseitige Verbindungslasche (620) im Verhältnis zu dieser Stirnseite des Gitters (61) in eine in etwa normale Richtung zu den durchbrochenen Stirnseiten des Gitters zurückgesetzt ist.

9. Gitter (61) nach den Ansprüchen 6 oder 7, wobei die erste stirnseitige Verbindungslasche (617) und die zweite stirnseitige Verbindungslasche (620) im Verhältnis zu den beiden durchbrochenen Stirnseiten (610, 611) des Gitters (61) in eine in etwa normale Richtung zu den durchbrochenen Stirnseiten des Gitters zurückgesetzt sind.

10. Gitter (61) nach irgendeinem der Ansprüche 5 bis 9, wobei das erste nachgelagerte Verbindungsmittel zumindest eine erste seitliche Verbindungslasche (623) umfasst, und das zweite nachgelagerte Verbindungsmittel zumindest eine zweite seitliche Verbindungslasche (624) umfasst, wobei sich jede seitliche Verbindungslasche (623, 624) in etwa parallel zum nachgelagerten Seitenrand (615) erstreckt.

11. Gitter (61) nach Anspruch 10, wobei die erste seitliche Verbindungslasche (623) komplanar oder versetzt im Verhältnis zum besagten nachgelagerten Seitenrand (615) in einer ersten nachgelagerten Ecke (618) des Gitters (61) angeordnet ist, und die zweite seitliche Verbindungslasche (624) in einer zweiten nachgelagerten Ecke (621) des Gitters (61) gegenüber der ersten nachgelagerten Ecke (618) angeordnet ist.

12. Gitter (61) nach den Ansprüchen 10 oder 11, wobei die erste seitliche Verbindungslasche (623) und/ oder die zweite seitliche Verbindungslasche (624) folgendes aufweist:
- eine obere Wand (625) in etwa parallel und komplanar zu einer oberen Stirnseite (610) des Gitters (61), und/ oder
- eine untere Wand in etwa parallel und komplanar zu einer unteren Stirnseite (611) des Gitters (61).

13. Zusammensetzung von Gittern (61) für eine Schubumkehr mit Gittern, zumindest ein erstes, ein zweites und ein drittes Gitter (61) nacheinander nach irgendeinem der vorherigen Ansprüche umfassend, wobei:
- das erste Gitter (61) durch das ergänzende Zusammenwirken zwischen dem ersten nachgelagerten Verbindungsmittel (617; 623), das auf dem ersten quer verlaufenden Rand (616) des ersten Gitters (61) angeordnet ist, und dem zweiten nachgelagerten Verbindungsmittel (620; 624) mit dem zweiten Gitter (61) verbunden wird, das auf dem zweiten quer verlaufenden Rand (616) des zweiten Gitters (61) angeordnet ist, wobei der erste quer verlaufende Rand (616) des ersten Gitters (61) in etwa fugendicht mit dem zweiten quer verlaufenden Rand (616) des zweiten Gitters (61) ist, mit Ausnahme jener Zone, in der die besagten nachgelagerten Verbindungsmittel angeordnet sind; und
- das zweite Gitter (61) durch das ergänzende Zusammenwirken zwischen dem ersten nachgelagerten Verbindungsmittel (617; 623), das auf dem ersten quer verlaufenden Rand (616) des zweiten Gitters (61) angeordnet ist, und dem zweiten nachgelagerten Verbindungsmittel (620; 624) mit dem dritten Gitter (61) verbunden wird, das auf dem zweiten quer verlaufenden Rand (616) des dritten Gitters (61) angeordnet ist, wobei der erste quer verlaufende Rand (616) des zweiten Gitters (61) in etwa fugendicht mit dem zweiten quer verlaufenden Rand (616) des dritten Gitters (61) ist, mit Ausnahme jener Zone, in der die besagten nachgelagerten Verbindungsmittel angeordnet sind.

14. Gondel für ein Flugzeug-Turbotriebwerk, eine Schubumkehr mit Gittern umfassend, die mit zumindest einer Zusammensetzung nach Anspruch 13 ausgerüstet ist, wo die Gitter (61) der Zusammensetzung mit ihren jeweiligen vorgelagerten Befestigungsmitteln in ihren vorgelagerten Teilen (612) auf einer festen Struktur der Gondel, wie einer vorderen Rahmenstruktur, befestigt sind, und wo die Gitter (61) der Zusammensetzung nur in ihren jeweiligen nachgelagerten Teilen (613) durch ihre nachgelagerten Verbindungsmittel (617, 620; 623, 624) direkt miteinander verbunden sind.

## Claims

1. A self-supporting type cascade vane (61) for a cascade-type thrust reverser of a nacelle for an aircraft turbojet engine, said cascade vane (61) being provided with a plurality of cells with two opposite and perforated front faces (610, 611), including, on the one hand:
- two opposite lateral edges extending over the width of the cascade vane (61), namely an upstream lateral edge (614) located in an upstream part (612) and a downstream lateral edge (615) located in a downstream part (613);
- two opposite transverse edges (616) extending over the length of the cascade vane (61), namely a first transverse edge and a second transverse edge;
and including, on the other hand:
- upstream fastening means (632) arranged on the upstream lateral edge (614) and designed to fasten the cascade vane (61) on a fixed structure of the nacelle such as a front frame structure; and
- first and second connecting means (617, 620; 623, 624) arranged respectively on the first and second transverse edges (616) to connect the cascade vane (61) to two adjacent cascade vanes (61) in position on the thrust reverser;
**characterized in that** the first and second connecting means (617, 620; 623, 624), called first and second downstream connecting means, are disposed only on the downstream part (613) of the cascade vane (61) to connect said cascade vane (61) directly to two adjacent cascade vanes (61) only in its downstream part (613), said downstream part (613) corresponding to an area extending from the downstream lateral edge (615) over a length less than or equal to N times the length of the last cell located along said downstream lateral edge (615), where N is less than 3 and preferably less than or equal to 1.

2. The cascade vane (61) according to claim 1, wherein the at least one of the first and second downstream connecting means (617, 620; 623, 624) is disposed partially recessed from the concerned transverse edge.

3. The cascade vane (61) according to claim 2, wherein one of the first and second downstream connecting means (617, 620; 623, 624) is disposed partially recessed with respect to the concerned transverse edge (616) inwardly of the cascade vane (61), and the other of the first and second downstream connecting means (617, 620; 623, 624) is disposed partially recessed with respect to the concerned transverse edge (616) outwardly of the cascade vane (61).

4. The cascade vane (61) according to any one of claims 1 to 3, wherein one of the first and second downstream connecting means (620; 623, 624) has at least one orifice of passage of a fastening member located recessed with respect to the concerned transverse edge (616) inwardly of the cascade vane (61), while the other of the first and second downstream connecting means (617; 623, 624) has at least one orifice of passage of a fastening member located recessed with respect to the concerned transverse edge (616) outwardly of the cascade vane (61).

5. The cascade vane (61) according to any one of claims 1 to 4, wherein the first downstream connecting means includes at least one first connecting lug (617; 623) and the second downstream connecting means includes at least one second connecting lug (620; 624).

6. The cascade vane (61) according to claim 5, wherein the first downstream connecting means includes at least a first front connecting lug (617) and the second downstream connecting means includes at least a second front connecting lug (620), each front connecting lug (617, 620) extending substantially parallel to the perforated front faces (610, 611) of the cascade vane (61).

7. The cascade vane (61) according to claim 6, wherein the first front connecting lug (617) is disposed in a first downstream corner (618) of the cascade vane (61) and is located in at least partial overlapping of a cell (619) located in said first downstream corner (618), and the second front connecting lug (620) is disposed in a second downstream corner (621) of the cascade vane (61), opposite the first downstream corner (618), and is located in at least partial overlapping of a cell (622) located in said second downstream corner (621).

8. The cascade vane (61) according to claims 6 or 7, wherein the first front connecting lug (617) is leveling one of the two perforated front faces (610, 611) of the cascade vane (61), preferably the upper front face (610) of the cascade vane (61) intended to be located outwardly in position on the thrust reverser, whereas the second front connecting lug (620) is recessed with respect to this front face of the cascade vane (61) in a direction substantially normal to the perforated front faces of the cascade vane.

9. The cascade vane (61) according to claim 6 or 7, wherein the first front connecting lug (617) and the second front connecting lug (620) are recessed with respect to the two perforated front faces (610, 611) of the cascade vane (61) in a direction substantially normal to the perforated front faces of the cascade vane.

10. The cascade vane (61) according to any one of claims 5 to 9, wherein the first downstream connecting means includes at least a first lateral connecting lug (623) and the second downstream connecting means includes at least a second lateral connecting lug (624), each lateral connecting lug (623, 624) extending substantially parallel to the downstream lateral edge (615).

11. The cascade vane (61) according to claim 10, wherein the first lateral connecting lug (623) is disposed in a first downstream corner (618) of the cascade vane (61), in a coplanar or offset manner with respect to said downstream lateral edge (615), and the second lateral connecting lug (624) is disposed in a second downstream corner (621) of the cascade vane (61), opposite the first downstream corner (618).

12. The cascade vane (61) according to claim 10 or 11, wherein the first lateral connecting lug (623) and/or the second lateral connecting lug (624) present:
- a top wall (625) substantially parallel to and coplanar with an upper front face (610) of the cascade vane (61), and/or
- a bottom wall substantially parallel to and coplanar with a lower front face (611) of the cascade vane (61).

13. A cascade vane assembly (61) for a cascade-type thrust reverser, including at least a first, a second and a third successive cascade vanes (61) in accordance with any one of the preceding claims, wherein:
- the first cascade vane (61) is connected to the second cascade vane (61) through complementary cooperation between the first downstream connecting means (617; 623) arranged on the first transverse edge (616) of the first cascade vane (61) and the second downstream connecting means (620; 624) arranged on the second transverse edge (616) of the second cascade vane (61), the first transverse edge (616) of the first cascade vane (61) substantially joining the second transverse edge (616) of the second cascade vane (61) except in the area where said downstream connecting means are arranged; and
- the second cascade vane (61) is connected to the third cascade vane (61) through complementary cooperation between the first downstream connecting means (617; 623) arranged on the first transverse edge (616) of the second cascade vane (61) and the second downstream connecting means (620; 624) arranged on the second transverse edge (616) of the third cascade vane (61), the first transverse edge (616) of the second cascade vane (61) substantially joining the second transverse edge (616) of the third cascade vane (61) except in the area where said downstream connecting means are arranged.

14. A nacelle for an aircraft turbojet engine including a cascade-type thrust reverser equipped with at least one assembly in accordance with claim 13, wherein the cascade vanes (61) of the assembly are fastened in their upstream parts (612), with their respective upstream fastening means, on a fixed structure of the nacelle such as a front frame structure, and wherein the cascade vanes (61) of the assembly are directly connected together only in their respective downstream parts (613) through their downstream connecting means (617, 620; 623, 624).
